# EUROPÄISCHE PATENTSCHRIFT

(11) **EP 2 528 785 B1**
(45) Veröffentlichungstag und Bekanntmachung des Hinweises auf die Patenterteilung: **08.01.2014**
(21) Anmeldenummer: 11701990.1
(22) Anmeldetag: 26.01.2011
(51) Int. Cl.: B60R 25/00, E05F 15/20

(54) **STEUERVORRICHTUNG FÜR EIN FAHRZEUG MIT AUTOMATISCH ÖFFNENDER UND/ODER AUTOMATISCH SCHLIESSENDER KLAPPE**
CONTROLLING DEVICE FOR A VEHICLE WITH AUTOMATIC OPENING AND / OR CLOSING OF A TAILGATE
DISPOSITIF DE CONTRÔLE POUR UN VÉHICULE AVEC UN HAYON QUI EST AUTOMATIQUEMENT OUVERTE ET / OU FERMÉ

(30) Priorität: 29.01.2010 DE 102010006213
(43) Veröffentlichungstag der Anmeldung: 05.12.2012
(73) Patentinhaber: Bayerische Motoren Werke Aktiengesellschaft, 80809 München (DE)
(72) Erfinder: WAGENHUBER, Josef, 85302 Gerolsbach (DE); MAYR, Jürgen, 80807 München (DE); SAUER, Dirk, 85221 Dachau (DE)
(86) Internationale Anmeldenummer: PCT/EP2011/051072
(87) Internationale Veröffentlichungsnummer: WO 2011/092206

(56) Entgegenhaltungen:
- DE-B3-102004 041 709
- DE-U1-202005 020 140

## Beschreibung

Die Erfindung betrifft eine Steuervorrichtung für ein Fahrzeug mit automatisch öffnender und/oder automatisch schließender Klappe nach dem Oberbegriff des Patentanspruchs 1.

Eine derartige Steuervorrichtung ist im Zusammenhang mit einem Fahrzeug, das zumindest eine automatisch öffnende Klappe aufweist, bereits aus der DE 10 2004 041 709 B3 bekannt.

Weiterhin ist aus dem Fahrzeugprogramm der Anmelderin (siehe beispielsweise Betriebsanleitung zum BMW 5-er Modell, Jahrgang 2002 Bestell-Nr. 01 40 0 156 808, Seite 34-36) ein Kraftfahrzeug mit über Fernbedienung aktivierbarer selbst öffnender Klappe beschrieben. Hierbei kann der Bediener per Tastendruck auf der Fernbedienung manuell einen Öffnungsbefehl für die Heckklappe initiieren, welche sich dann automatisch vollständig öffnet.

Der Erfindung liegt die Aufgabe zugrunde, eine gattungsgemäße Steuervorrichtung derart weiterzubilden, dass der Stromverbrauch der betroffenen elektronischen und elektrischen Fahrzeug-Komponenten reduziert wird.

Erfindungsgemäß wird die Aufgabe durch die Gesamtheit der Merkmale des Patentanspruchs 1 gelöst. Vorteilhafte Weiterbildungen sind die Gegenstände der abhängigen Patentansprüche.

Die erfindungsgemäße Steuervorrichtung betrifft ein Fahrzeug mit automatisch öffnender und/oder automatisch schließender Klappe, die mindestens einen programmierbaren Bedienschalter und ein programmierbares elektronisches Steuergerät aufweist, wobei der Bedienschalter in Form eines Näherungssensors willkürlich berührungslos zu betätigen ist und bei erfolgter Betätigung ein Bedienanforderungssignal erzeugt, das Eingangssignal des Steuergerätes ist. Das Steuergerät ist derart programmiert, dass es bei Vorliegen des Bedienanforderungssignals und gegebenenfalls mindestens einer weiteren Bedingung einen Schwenkbefehl an einen Schließmechanismus zum Öffnen oder Schließen der Klappe ausgibt. Das Steuergerät und/oder der Bedienschalter bzw. Näherungssensor sind weiterhin derart programmiert, dass die Bedienanforderungssignale gezählt werden, solange mindestens eine erste festgelegte Bedingung noch nicht erfüllt ist, und dass bei Erreichen eines definierten maximalen Zählerstandes die Bedienanforderungssignale ignoriert werden, bis mindestens eine zweite festgelegte Bedingung erfüllt ist.

Hintergrund der Erfindung ist die Überlegung, dass bei einem Fahrzeug mit einer automatischen Klappensteuerung über einen berührungslosen am Fahrzeug angebrachten, von jedermann frei zugänglichen Näherungssensor Maßnahmen gegen Missbrauch vorgesehen werden sollten. Erstens darf nicht unmittelbar bei jeder Betätigung des Näherungssensors eine Klappe automatisch geöffnet oder geschlossen werden. Zweitens sollte bei einem abgestellten Fahrzeug nicht unnötig durch Aktivieren von Systemen Strom verbraucht werden. Daher wird mit der Erfindung ein sogenannter Spielschutz geschaffen, der bei zu häufigem und bei offensichtlich unnötigem Betätigen des Näherungssensors die von der damit zusammenhängenden Funktion betroffenen elektrischen oder elektronischen Komponenten deaktiviert. Vorzugsweise ist auch eher der Näherungssensor anstelle des Steuergeräts in der erfindungsgemäßen Weise programmiert, da dieser weniger Strom verbraucht als das Steuergerät. Beispielsweise auch die Überprüfung der Zugangsberechtigung weckt einige weiteren Verbraucher, die bei Erreichen des maximalen Zählerstandes wieder abgeschaltet werden können. Die Erfindung stellt also vorrangig die Minimierung des Stromverbrauchs bei abgestelltem Fahrzeug bzw. bei abgestellter Brennkraftmaschine sicher. Die Ausgabe des Schwenkbefehls vom Steuergerät zum tatsächlichen Öffnen oder Schließen einer Klappe kann während des Spielschutzes ebenfalls unterbunden werden.

In der Zeichnung ist ein Ausführungsbeispiel der Erfindung dargestellt. Es zeigt
- Fig. 1: in schematischer Darstellung ein Kraftfahrzeug, das eine aufgrund eines Öffnungsbefehls sich automatisch öffnende Klappe 2 umfasst, mit einem erfindungsgemäß vorhandenen Näherungssensor und Steuergerät und
- Fig. 2: sowie
- Fig. 3: mögliche Signalfolgen gemäß der Erfindung.

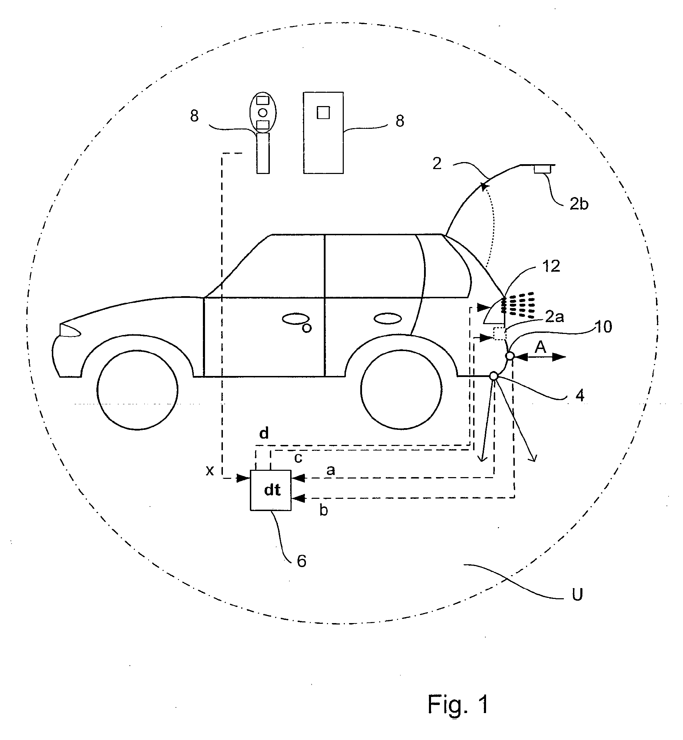

Im dargestellten Ausführungsbeispiel gemäß Fig. 1 ist die Klappe 2 als Heckklappe eines Kraftfahrzeugs ausgebildet. Die automatische Öffnung der Klappe 2 wird ausgehend von einem geschlossenen Zustand der Heckklappe 2 durch einen Öffnungsbefehl in Form eines Steuersignals c eines programmierbaren Steuergerätes 6 an einen Verriegelungs- bzw. Entriegelungsmechanismus 2a, 2b initiiert. Die Heckklappe wird daraufhin entweder aufgrund einer Federvorspannung oder aufgrund einer aktivierten (z.B. elektrischen, hydraulischen oder pneumatischen) Motorik in eine geöffnete Position übergeführt. Vorzugsweisel wird die Klappe 2 dabei über ihren gesamten Öffnungsweg oder bis zu einem maximal erlaubten Öffnungsweg automatisch geöffnet. Der maximal erlaubte Öffnungsweg kann dabei mittels einer Vorrichtung gemäß der DE 100 56 569 A1 oder der DE 195 33 804 A1 vorgegeben sein.

Ferner umfasst das Kraftfahrzeug zumindest einen, vorzugsweise zwei Näherungssensor(en) 4, der (die) mit dem Steuergerät 6 wirkverbunden ist (sind). Im Folgenden wird zur Vereinfachung nur von einem Näherungssensor 4 gesprochen. Der Näherungssensor 4 ist ein programmierbarer Bedienschalter, der willkürlich berührungslos zu betätigen ist. Bei erfolgter Betätigung erzeugt er ein Bedienanforderungssignal a, das als Eingangssignal an das Steuergerät 6 geleitet wird.

Das Steuergerät 6 und der Näherungssensor 4 sind entweder getrennte programmierbare zusammenarbeitende Module oder sind in einem einzigen elektronischen programmierbaren Modul integriert. Die Erfindung kann in jedem Modul in Form eines Programmes oder in Form von Programmteilen enthalten sein. Vorzugsweise werden getrennte Module verwendet, wobei für den Näherungssensor 4 ein vergleichsweise einfaches elektronisches Modul verwendet wird, das im aktivierten Zustand möglichst wenig elektrische Energie verbraucht und vom Steuergerät 6 die für die Erfindung notwendigen Signale erhält.

Das Steuergerät 6 ist vorzugsweise derart ausgebildet, dass nicht nur das Vorliegen des Bedienanforderungssignals a überwacht wird, sondern auch weitere festgelegte Bedingungen, bevor es ein Steuersignal c - hier zum Öffnen der Heckklappe - ausgibt. Eine derartige weitere festgelegte Bedingung ist beispielsweise das zusätzliche Vorhandensein eines definierten Fahrzeug-Zustandssignals x, durch das beispielsweise eine nichtberechtigte Fahrzeuginbetriebnahme ausgeschlossen werden kann. Ein derartiges Zustandssignal x kann beispielsweise ein Entriegelungszustandssignal der Zentralverriegelung oder ein Erkennungssignal über das Vorhandensein eines Zugangsberechtigungsmittels 8 im Verriegelungszustand sein. Für die zweite Alternative wird beispielsweise unter Einbindung des Steuergerätes 6 geprüft, ob innerhalb eines vorgegebenen Bereiches U um das Fahrzeug herum ein Zugangsberechtigungsmittel (in der Regel ein Benutzer, der einen Funk-Schlüssel oder eine Key-Card mit sich führt) vorhanden ist. Derartige Überwachungsmittel sind bereits bekannt.

Eine weitere festgelegte Bedingung kann vorzugsweise auch das Erkennen eines Signals b eines Abstandserfassungssystem 10 (beispielsweise die Sensoren eines PDC-Systems) sein, das immer dann vom Abstandserfassungssystem 10 erzeugt wird, wenn sich ein Objekt (z.B. ein Bein) innerhalb eines vorgegebenen Abstandes zu einem Abstandssensor befindet. Vorzugsweise ist der Näherungssensor 4 in der Weise in der Nähe des Abstandserfassungssystems 10 angeordnet, dass sich ein bestimmtes detailliertes Annäherungsmuster eines Objekts erkennen lässt. Das Signal b ist dann ebenfalls Eingangssignal des Steuergerätes 6.

Der mindestens eine Näherungssensor 4 ist vorzugsweise derart angeordnet, dass ein Benutzer ihn durch Schwenken des Fußes im Bereich zwischen dem Fahrzeugaufbau und der Fahrbahnoberfläche zur Schaltung veranlassen bzw. schalten kann. Insbesondere ist der Näherungssensor 4 unterhalb eines Stoßfängers 12 oder auf der unteren Seite eines Stoßfängers 12 in diesen integriert angeordnet.

Liegen im Steuergerät 6 das Bedienanforderungssignal a und vorzugsweise zusätzlich die Signale x und/oder b vor, aktiviert es optional zuerst ein Bestätigungssignal d, hier beispielsweise ein einmaliges optisches Aufblinken der Warnblinkanlage 12, und anschließend durch das Steuersignal c den Ent-/ Verriegelungsmechanismus 2a, 2b zur Freigabe der automatisch öffnenden Klappe 2, z. B. verzögert um eine vorgegebene Zeit dt nach der Abgabe des Bestätigungssignals d oder des Bedienanforderungssignals a.

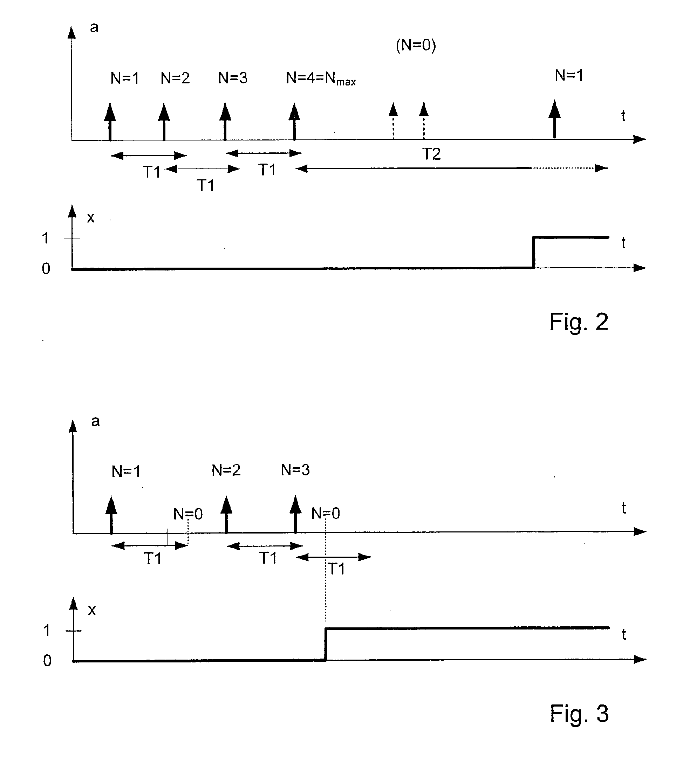

Anhand der Figuren 2 und 3 wird die erfindungsgemäße Ausgestaltung des Steuergeräts oder des Näherungssensors mittels möglicher Signalfolgen erläutert:
Vorzugsweise ist hier der Näherungssensor 4 (Fig. 1) grundsätzlich bei stehendem Fahrzeug eingeschaltet und derart programmiert, dass die Bedienanforderungssignale a gezählt werden, solange mindestens eine erste festgelegte Bedingung noch nicht erfüllt ist, und dass bei Erreichen eines definierten maximalen Zählerstandes Nₘₐₓ die Bedienanforderungssignale a ignoriert werden (z. B. Ihre Erfassung oder Auswertung gestoppt wird), bis mindestens eine zweite festgelegte Bedingung erfüllt ist. Der Zählerstand N wird dann zurückgesetzt: N=0.

Vorzugsweise ist eine erste festgelegte Bedingung das Ausbleiben eines Bedienanforderungssignals a während einer ersten vorgegebenen Zeitspanne T1 ab Auftreten eines vorherigen Bedienanforderungssignals a. Zusätzlich oder alternativ ist eine erste festgelegte Bedingung das Vorliegen eines definierten Zustandssignals x des Fahrzeugschließsystems (x=1), wie z.B. das Vorliegen eines Zugangsberechtigungsmittels, der Entriegelungszustand der Zentralverriegelung oder der zu ändernde Klappenzustand.

Die oder eine zweite festgelegte Bedingung ist vorzugsweise der Ablauf einer zweiten vorgegebenen Zeitspanne T2 oder das Vorliegen eines definierten Zustandssignals x des Fahrzeugschließsystems (x=1) oder der Start einer Brennkraftmaschine.

Die oder eine zweite festgelegte Bedingung kann gleich der oder einer ersten festgelegten Bedingung sein. Hierzu eignet sich insbesondere das Vorliegen des definierten Zustandssignals x (x=1).

Der Näherungssensor (4) ist derart programmiert, dass während des Ablaufs der ersten definierten Zeitspanne T1 ab dem Auftreten eines Bedienanforderungssignals a, solange mindestens eine erste festgelegte Bedingung - z. B. x=1 - noch nicht erfüllt ist, überprüft wird, ob ein weiteres Bedienanforderungssignal a auftritt, und wenn ja, dass der Zählerstand N erhöht und die erste definierte Zeitspanne T1 erneut gestartet wird, bis der maximale definierte Zählerstand Nₘₐₓ erreicht ist. Im dargestellten Ausführungsbeispiel nach Fig. 2 ist Nₘₐₓ=4.

Der Näherungssensor 4 ist weiterhin derart programmiert, dass ab Erreichen des maximalen definierten Zählerstandes Nₘₐₓ die Auswertung des Bedienanforderungssignals a gestoppt wird und der Zählerstand N zurückgesetzt wird (N=0), bis die oder eine zweite definierte Bedingung erfüllt ist. In Fig. 2 führt als zweite definierte Bedingung das Auftreten des definierten Zustandssignals x (hier x=1) dazu, das Bedienanforderungssignal a wieder zur erfassen und auszuwerten. Würde im Ausführungsbeispiel nach Fig. 2 x=0 bleiben, würde als zweite definierte Bedingung der Ablauf der definierten zweiten Zeitspanne T2 ab Erreichen des maximale Zählerstandes Nₘₐₓ dazu führen, das Bedienanforderungssignal a wieder zur erfassen und auszuwerten.

In Fig. 3 wird nach Auftreten eines dritten Bedienanforderungssignals a (N=3) innerhalb des daran anschließenden Ablaufs der ersten definierten Zeitspanne T1 eine zweite festgelegte Bedingung erfüllt, nämlich das Auftreten des definierten Zustandssignals x: x=1. Danach wird der Zählerstand wieder zurückgesetzt (N=0).

Die definierten Zeitspannen T1 und T2 können variable Parameter sein. Das Rücksetzen des Zählers N (N=0) kann auch generell als Ausschaltbefehl des erfindungsgemäßen "Spielschutzes" verwendet werden. Für die erste definierte Zeitspanne T1 hat sich ein Bereich in der Größenordnung von 1 bis 15 sec als vorteilhaft herausgestellt. Für die zweite definierte Zeitspanne T2 hat sich ein Bereich in der Größenordnung von 10 bis 150 min als vorteilhaft herausgestellt.

Ergänzend wird daraufhin gewiesen, dass eine automatisch öffnende Klappe 2 beispielsweise der Kofferraumdeckel, die Hecklappe, die Motorhaube, der Tankdeckel, eine Einstiegstüre oder eine anderer Verschluss einer Beladungs-, Befüllungs- oder Einstiegsöffnung des Fahrzeuges sein kann.

Die Erfindung ist auch auf anwendbar, wenn eine Klappe sowohl automatisch geöffnet als auch automatisch geschlossen werden kann. In diesem Fall kann eine erste festgelegte Bedingung zum Öffnen der Klappe der geschlossene Zustand der Klappe und zum Schließen der Klappe der offene Zustand der Klappe sein. Insbesondere zum Schließen der Klappe kann eine erste festgelegte Bedingung auch ein Freigabesignal einer Einklemmschutzvorrichtung sein.

## Patentansprüche

1. Steuervorrichtung für ein Fahrzeug mit automatisch öffnender und/oder automatisch schließender Klappe, die mindestens einen programmierbaren Bedienschalter (4) und ein programmierbares elektronisches Steuergerät (6) aufweist,
wobei der Bedienschalter in Form eines Näherungssensors (4) willkürlich berührungslos zu betätigen ist und bei erfolgter Betätigung ein Bedienanforderungssignal (a) erzeugt, das Eingangssignal des Steuergerätes (6) ist,
wobei das Steuergerät (6) derart programmiert ist, dass es bei Vorliegen des Bedienanforderungssignals (a) und gegebenenfalls mindestens einer weiteren Bedingung einen Schwenkbefehl an einen Schließmechanismus (2a, 2b) zum Öffnen oder Schließen der Klappe (2) ausgibt,.
**dadurch gekennzeichnet, dass** das Steuergerät (6) und/oder der Bedienschalter (4) derart programmiert sind/ist, dass die Bedienanforderungssignale (a) gezählt werden, solange mindestens eine erste festgelegte Bedingung noch nicht erfüllt ist, und dass bei Erreichen eines definierten maximalen Zählerstandes (Nₘₐₓ) die Bedienanforderungssignale (a) ignoriert werden, bis mindestens eine zweite festgelegte Bedingung erfüllt ist.

2. Steuervorrichtung nach Patentanspruch 1, **dadurch gekennzeichnet, dass** eine erste festgelegte Bedingung das Ausbleiben eines Bedienanforderungssignals (a) während einer ersten vorgegebenen Zeitspanne (T1) ab Auftreten eines vorherigen Bedienanforderungssignals (a) ist.

3. Steuervorrichtung nach Patentanspruch 1 oder 2, **dadurch gekennzeichnet, dass** eine erste festgelegte Bedingung das Vorliegen eines definierten Zustandssignals (x) des Fahrzeugschließsystems ist.

4. Steuervorrichtung nach einem der vorangegangenen Patentansprüche, **dadurch gekennzeichnet, dass** die oder eine zweite festgelegte Bedingung der Ablauf einer zweiten vorgegebenen Zeitspanne (T2) oder das Vorliegen eines definierten Zustandssignals (x) des Fahrzeugschließsystems oder der Start einer Brennkraftmaschine ist.

5. Steuervorrichtung nach einem der vorangegangenen Patentansprüche, **dadurch gekennzeichnet, dass** die oder eine zweite festgelegte Bedingung gleich der oder einer ersten festgelegten Bedingung ist.

6. Steuervorrichtung nach einem der vorangegangenen Patentansprüche, **dadurch gekennzeichnet, dass** das Steuergerät (6) und/oder der Näherungssensor (4) derart programmiert sind/ist, dass während des Ablaufs der ersten definierten Zeitspanne (T1) ab dem Auftreten eines Bedienanforderungssignals (a), solange mindestens eine erste festgelegte Bedingung noch nicht erfüllt ist, überprüft wird, ob ein weiteres Bedienanforderungssignal (a) auftritt, und wenn ja, dass der Zählerstand erhöht und die erste definierte Zeitspanne (T1) erneut gestartet wird, bis der maximale definierte Zählerstand (Nₘₐₓ) erreicht ist.

## Claims

1. A control device for a vehicle with an automatically opening and/or automatically closing tailgate, which has at least one programmable operating switch (4) and a programmable electronic control apparatus (6), wherein the operating switch in the form of a proximity sensor (4) is to be actuated contactlessly at random and, when actuation has taken place, produces an operation request signal (a), which is the input signal of the control apparatus (6), wherein the control apparatus (6) is programmed in such a way that upon the presence of the operation request signal (a) and optionally at least one further condition, it emits a pivoting command to a closing mechanism (2a, 2b) to open or close the tailgate (2), **characterised in that** the control apparatus (6) and/or the operating switch (4) is/are programmed in such a way that the operation request signals (a) are counted as long as at least one first specified condition has not yet been met, and **in that** on reaching a defined maximum counter reading (Nₘₐₓ), the operation request signals (a) are ignored until at least a second specified condition is met.

2. A control device according to claim 1, **characterised in that** a first specified condition is the absence of an operation request signal (a) during a first predetermined time period (T1) from the occurrence of a previous operation request signal (a).

3. A control device according to claim 1 or 2, **characterised in that** a first specified condition is the presence of a defined state signal (x) of the vehicle closing system.

4. A control device according to any one of the preceding claims, **characterised in that** the or one second specified condition is the expiry of a second predetermined time period (T2) or the presence of a defined state signal (x) of the vehicle closing system or the start of an internal combustion engine.

5. A control device according to any one of the preceding claims, **characterised in that** the or one second specified condition is the same as the or one first specified condition.

6. A control device according to any one of the preceding claims, **characterised in that** the control apparatus (6) and/or the proximity sensor (4) is/are programmed in such a way that during the course of the first defined time period (T1) from the occurrence of an operation request signal (a), as long as at least one first specified condition has not yet been met, a check is made as to whether a further operation request signal (a) occurs, and if so, **in that** the counter reading is increased and the first defined time period (T1) is started again until the maximum defined counter reading (Nₘₐₓ) is reached.

## Revendications

1. Dispositif de commande pour un véhicule équipé d'un hayon à ouverture et/ou fermeture automatique qui comporte au moins un commutateur d'actionnement programmable (4) et un appareil de commande électronique programmable (6), le commutateur d'actionnement étant destiné à être actionné arbitrairement sans contact sous la forme d'un capteur de proximité (4) et produisant suite à son actionnement un signal de demande d'actionnement (a) correspondant à un signal d'entrée de l'appareil de commande (6), cet appareil de commande (6) étant programmé de sorte que, en présence du signal de demande d'actionnement (a) et le cas échéant d'au moins une autre condition, il délivre un ordre de pivotement à un mécanisme de fermeture (2a, 2b) pour ouvrir ou fermer le hayon (2),
**caractérisé en ce que**
l'appareil de commande (6) et/ou le commutateur d'actionnement (4) est/sont programmé(s) de sorte que les signaux de demande d'actionnement (a) soient comptés tant qu'au moins une première condition déterminée n'est pas encore remplie et lorsque l'on a atteint un état de comptage maximum défini (Nₘₐₓ) les signaux de demande d'actionnement (a) sont ignorés jusqu'à ce qu'au moins une seconde condition déterminée soit remplie.

2. Dispositif de commande conforme à la revendication 1,
**caractérisé en ce qu'**
une première condition déterminée est la persistance d'un signal de demande d'actionnement (a) pendant une première période de temps prédéfinie (T1) à partir de l'arrivée d'un signal de demande d'actionnement (a) précédent.

3. Dispositif de commande conforme à la revendication 1 ou 2,
**caractérisé en ce qu'**
une première condition déterminée est la présence d'un signal d'état défini (x) du système de fermeture du véhicule.

4. Dispositif de commande conforme à l'une des revendications précédentes,
**caractérisé en ce que**
la ou une seconde condition déterminée est l'écoulement d'une seconde période de temps prédéfinie (T2) ou la présence d'un signal d'état défini (x) du système de fermeture du véhicule ou le démarrage du moteur.

5. Dispositif de commande conforme à l'une des revendications précédentes,
**caractérisé en ce que**
la ou une seconde condition définie est similaire à la ou à une première condition définie.

6. Dispositif de commande conforme à l'une des revendications précédentes,
**caractérisé en ce que**
l'appareil de commande (6) et/ou le capteur de proximité (4) est/sont programmé(s) de façon à vérifier pendant l'écoulement de la première période de temps définie (T1) à partir de l'arrivée d'un signal de demande d'actionnement (a) aussi longtemps qu'au moins une première condition définie n'est pas encore remplie si un autre signal de demande d'actionnement (a) se présente, et dans l'affirmative l'état de comptage est augmenté et la première période de temps définie (T1) est à nouveau commencée jusqu'à ce que l'état de comptage défini maximum (Nₘₐₓ) ait été atteint.
